(19) Europäisches Patentamt
European Patent Office
Office européen des brevets

(11) **EP 1 290 412 B1**

(12) **EUROPÄISCHE PATENTSCHRIFT**

(45) Veröffentlichungstag und Bekanntmachung des Hinweises auf die Patenterteilung:
**04.01.2012 Patentblatt 2012/01**

(51) Int Cl.:
*G01F 1/74* (2006.01)　　*G01F 25/00* (2006.01)
*G01F 15/04* (2006.01)

(21) Anmeldenummer: **01931320.4**

(22) Anmeldetag: **31.05.2001**

(86) Internationale Anmeldenummer:
**PCT/CH2001/000338**

(87) Internationale Veröffentlichungsnummer:
**WO 2001/096819 (20.12.2001 Gazette 2001/51)**

(54) **GASZÄHLER UND VERFAHREN ZUR BESTIMMUNG DES VERBRAUCHS EINES GASGEMISCHES**

GAS METER AND METHOD FOR DETERMINING A CONSUMED QUANTITY OF A GAS MIXTURE

COMPTEUR DE GAZ ET PROCEDE POUR DETERMINER UNE QUANTITE CONSOMMEE D'UN MELANGE GAZEUX

(84) Benannte Vertragsstaaten:
**AT BE CH CY DE DK ES FI FR GB GR IE IT LI LU MC NL PT SE TR**

(30) Priorität: **14.06.2000 EP 00810511**

(43) Veröffentlichungstag der Anmeldung:
**12.03.2003 Patentblatt 2003/11**

(73) Patentinhaber: **Hydrometer GmbH**
**91522 Ansbach (DE)**

(72) Erfinder:
 • **MATTER, Daniel**
　**CH-5200 Brugg (CH)**
 • **PRETRE, Philippe**
　**CH-5405 Baden-Dättwil (CH)**
 • **KLEINER, Thomas**
　**CH-5442 Fislisbach (CH)**
 • **WENK, Alexander**
　**CH-5079 Zeihen (CH)**

(74) Vertreter: **Diehl Patentabteilung**
**c/o Diehl Stiftung & Co. KG**
**Stephanstrasse 49**
**90478 Nürnberg (DE)**

(56) Entgegenhaltungen:
　EP-A- 0 469 649　　EP-A- 0 608 514
　WO-A-98/57131　　GB-A- 2 340 945
　GB-A- 2 340 945　　US-A- 5 237 523
　US-A- 5 237 523　　US-B1- 6 517 237

 • MAYER F ET AL: "Single-chip CMOS anemometer", ELECTRON DEVICES MEETING, 1997. TECHNICAL DIGEST., INTERNATIONAL WASHINGTON, DC, USA 7-10 DEC. 1997, NEW YORK, NY, USA,IEEE, US, 7 December 1997 (1997-12-07), pages 895-898, XP010265646, DOI: DOI:10.1109/IEDM.1997.650525 ISBN: 978-0-7803-4100-5
 • MAYER F ET AL: "Single-chip CMOS anemometer", ELECTRON DEVICES MEETING, 1997. TECHNICAL DIGEST., INTERNATIONAL WASHINGTON, DC, USA 7-10 DEC. 1997, NEW YORK, NY, USA,IEEE, US, 7 December 1997 (1997-12-07), pages 895-898, XP010265646, DOI: DOI:10.1109/IEDM.1997.650525 ISBN: 978-0-7803-4100-5

**Beschreibung**

**Technisches Gebiet**

Die Erfindung bezieht sich auf ein Verfahren zur Bestimmung eines Gasgemisch-Verbrauchs und einen Gaszähler gemäss Oberbegriff des Patentanspruches 1 beziehungsweise 8. Das Verfahren und der Gaszähler sind insbesondere für den Gebrauch im Haushalt- und Gewerbebereich und insbesondere zur Bestimmung des Bezugs von Erdgas geeignet.

**Stand der Technik**

Heute basieren Gasrechnungen, insbesondere im Haushalt- und Gewerbebereich, ausschliesslich auf dem bezogenen Gasvolumen. Es werden deshalb vor allem Gaszähler eingesetzt, welche direkt auf einer Volumenmessung des durchflossenen Gases basieren, wobei sie teilweise Messfehler, welche durch Temperaturänderungen entstehen, kompensieren.

Der wohl am häufigsten eingesetzte Gaszähler ist der sogenannte Balgengaszähler, wie er in U. Wernekinck, Gasmessung und Gasabrechnung, Vulkan-Verl. 1996, 20-31, beschrieben ist. Der Balgengaszähler verfügt über zwei Messkammern, welche der Reihe nach wechselseitig durch das durchströmende Gas gefüllt und wieder entleert werden. Während eine Kammer sich füllt, verdrängt sie in der anderen das Gas. Die Füllungen beziehungsweise Leerungen werden gezählt und ergeben multipliziert mit dem Messkammervolumen das Gesamtvolumen des durchgeströmten Gases. Da das Volumen des Gases jedoch mit der Änderung von Umgebungstemperatur und Druck variiert, unterliegen diese Messungen Fehlern. Im Sommer, wenn das Gas warm ist und ein grösseres Volumen einnimmt, bezahlt der Konsument mehr für denselben kalorimetrischen Wert des Gases als im Winter. Für die heutigen Balgengaszähler existieren deshalb einfache mechanische oder elektrische Vorrichtungen zur Temperaturkompensation, in der Praxis kommen diese allerdings selten zum Einsatz. Druckschwankungen werden jedoch nicht berücksichtigt.

Aus WO 99/06800 ist ein Gaszähler bekannt, welcher eine Volumendurchflussrate bestimmt. Hierfür wird in einer Gasröhre mittels eines ersten Thermistors das Abkühlverhalten und mittels eines zweiten Thermistors die aktuelle Temperatur des Gases detektiert und daraus eine Durchflussrate der Gasmoleküle bestimmt. In der Röhre ist ferner eine Zelle angeordnet, in welcher das Abkühlverhalten von ruhendem Gas detektiert wird. Dadurch lässt sich während des Betriebs der Gasleitung zu jedem beliebigen Zeitpunkt ein Kalibrierwert erhalten. Mittels dieses Kalibrierwertes lässt sich nun aus dem Abkühlverhalten des ersten Thermistors wiederum die Volumendurchflussrate bestimmen.

Trotz all dieser Kompensationen sind Gaszähler, welche auf volumetrische Messungen beruhen, stets fehlerbehaftet und führen zu einer inkorrekten Gasrechnung. Zudem ist ein Abrechnungsprinzip, welches auf einem Volumenverbrauch basiert, gegenüber dem Verbraucher unfair. Sein Gasverbrauch bestimmt sich nämlich nicht nach dem Volumen, sondern nach der Gasmenge, das heisst der verbrauchten Masse des Gases, sowie nach der Qualität des Gases, das heisst, seinem Heizwert. Je dichter und je qualitativ hochstehender das Gas ist, umso weniger Volumen wird zur Erzielung desselben Wirkungsgrades benötigt, sei dies in einer Heizung, einer Warmwasseraufbereitung oder einer Kochstelle.

In der noch unveröffentlichten Deutschen Patentanmeldung Nr. 199 08 664.8 wird deshalb ein Gaszähler beschrieben, welcher die Gasmassen-Durchflussrate bestimmt und somit die Dichte des Gases berücksichtigt. Hierfür wird vorzugsweise ein Anemometer eingesetzt, wie es aus F. Mayer et al., Single-Chip CMOS Anemometer, Proc. IEEE, International Electron Devices Meeting (IEDM, 1997), 895-898 bekannt ist.

In den oben beschriebenen Gaszählern werden jedoch Schwankungen in der Qualität des Gases nicht berücksichtigt. Diese Schwankungen sind vorallem bei Erdgas beträchtlich und entstehen hauptsächlich dadurch, dass das Erdgas je nach Quelle eine andere Zusammensetzung aufweist. In der Gaszuleitung werden jedoch Gase von verschiedenen Quellen gemischt angeboten, wobei das Mischungsverhältnis je nach Angebot stark variieren kann.

Aus dem Stand der Technik sind zwar Geräte bekannt, welche den Heizwert eines Gases berücksichtigen und einen Energieverbrauch bestimmen. So offenbart WO 00/11465 ein Energiemessgerät, welches einerseits einen Balgengaszähler zur Messung des Volumens und andererseits eine Vorrichtung zur Bestimmung des kalorimetrischen Wertes eines Gases aufweist, wobei diese kalorimetrische Messvorrichtung auf einem akustischen Messprinzip basiert. Auch US-A-6'047'589 offenbart ein Energiemessgerät, welches Durchflussvolumen und kalorimetrischen Wert eines Gases bestimmt, wobei hier beide Messungen auf dem akustischen Effekt basieren. Beide Energiemessgeräte sind somit zur Volumenmessung geeicht, wobei sie jeweils den aktuell vor Ort gemessenen Heizwert mit dem Volumenmesswert verrechnen, um so den gewünschten Energiewert zu erhalten.

Die US 5,237,523 betrifft ein Verfahren zur Korrektur einer Flussmessung eines Gases, wobei eine Kalibration des Flusssensors stattfindet, Korrekturfaktoren für den Massendurchfluss bei bestimmten Temperaturen und korrigierte Durchflusswerte ermittelt und diese über einen Korrekturfaktor berichtigt werden, wobei die Kalibration stets mit dem gleichen Gas durchgeführt wird, das im Anschluss gemessen werden soll.

Diese Energiemessgeräte sind somit relativ kompliziert aufgebaut, müssen sie doch sowohl eine Volumenmessung, eine Heizwertbestimmung und zudem eine Verknüpfung der zwei erhaltenen Messwerte durchführen können. Derartige Geräte sind deshalb für den Einsatz als normaler Gaszähler im Haushalt- und Gewerbebereich zu teuer.

**Darstellung der Erfindung**

Es ist deshalb Aufgabe der Erfindung, ein Verfahren zur Bestimmung eines Gasgemisch-Verbrauchs und einen Gaszähler der eingangs genannten Art zu schaffen, welche auf einfache Art und Weise die Messung eines heizwertabhängigen Gasbezuges ermöglichen und somit für den Einsatz im Haushalt- und Gewerbebereich geeignet sind.

Diese Aufgabe löst ein Verfahren und ein Gaszähler mit den Merkmalen des Patentanspruches 1 beziehungsweise 8.

Das erfindungsgemässe Verfahren geht von der Erkenntnis aus, dass sich ein Sensorsignal bei Messung einer Durchflussrate, insbesondere einer Massen-Durchflussrate, in Abhängigkeit des kalorimetrischen Wertes oder Heizwertes des Gases ändert. Dabei weist diese Abhängigkeit eine feste Relation auf, welche in einer ersten Ordnung ein proportionales Verhältnis ist. Dadurch ist es möglich, den erfindungsgemässen Gaszähler direkt als Energiemessgerät zu eichen.

Weiterführende Korrekturen, welche Schwankungen in der Zusammensetzung des Gasgemisches berücksichtigen, können unabhängig von der Messung des Gaszählers durchgeführt werden. Die Bestimmung des dazu benötigten Heizwerts eines tatsächlich bezogenen Gasgemisches lässt sich von einer externen und örtlich vom Gaszähler getrennten Einheit durchführen.

Vorteilhaft ist, dass somit nicht jeder Gaszähler mit einer Einheit zur Bestimmung des Heizwertes ausgestattet sein muss. Eine einzige externe Einheit genügt, um mehrere Verbraucher und somit Gaszähler, welche an dasselbe Gasnetz angeschlossen sind, mit benötigten Angaben über den Heizwert des bezogenen Gasgemisches zu versorgen.

In einer bevorzugten Variante des erfindungsgemässen Verfahrens übermittelt diese externe Einheit dem Gaszähler die Angaben betreffend dem Heizwert und der Gaszähler führt selber eine Korrektur des gemessenen Energieverbrauchswertes anhand dieser Angaben durch.

In einer anderen bevorzugten Variante des Verfahrens übermittelt der Gaszähler den Energieverbrauchswert oder einen über eine bestimmte Zeitspanne aufintegrierten Energieverbrauchswert an eine Zentrale, in welcher dieser Wert mit den Angaben betreffend dem während dieser Zeitspanne vorhandenen Heizwert des bezogenen Gasgemisches korrigiert wird.

Weitere vorteilhafte Ausführungsformen gehen aus den abhängigen Patentansprüchen hervor.

**Kurze Beschreibung der Zeichnungen**

Im folgenden wird der Erfindungsgegenstand anhand eines bevorzugten Ausführungsbeispiels, welches in den beiliegenden Zeichnungen dargestellt ist, näher erläutert. Es zeigen:

Figur 1        einen Ausschnitt aus einer Gasleitung mit einem erfindungsgemässen Gaszähler;

Figur 2        einen Vergleich einer Abweichung von Monatsmittelwerten von Heizwerten von Erdgas und entsprechende Messwertänderungen des erfindungsgemässen Gaszählers;

Figur 3a       Messwertfehler in Bezug auf einen effektiven Energiewert eines Gases für eine Volumenmessung,

Figur 3b       für eine Massenflussmessung und

Figur 3c       für eine erfindungsgemässe Energieflussmessung.

**Wege zur Ausführung der Erfindung**

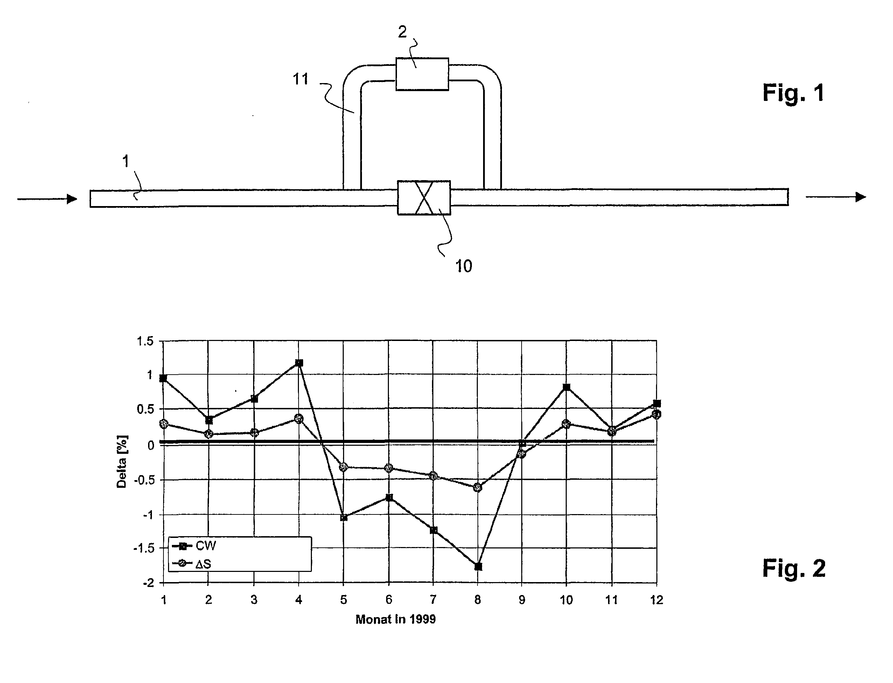

In Figur 1 ist eine Gasleitung dargestellt, welche mit einem erfindungsgemässen Gaszähler versehen ist. Die Gasleitung besteht aus einem Hauptleitungsrohr 1, welches mit einer gebäudeexternen, hier nicht dargestellten Gasnetzleitung verbunden ist. Dieses Hauptleitungsrohr 1 weist eine Rohrverengung 10 mit einem definierten Querschnitt oder andere, in das Hauptleitungsrohr 1 eingebrachte Mittel zur Erzielung eines wohldefinierten Druckabfalls (pressure dropper) auf. Durch die Gasleitung strömt ein Gas. Im allgemeinen handelt es sich dabei um ein Gasgemisch, dessen aktuelle Zusammensetzung sich ändert. Dies ist beispielsweise bei Erdgas der Fall, dessen drei Hauptbestandteile, Methan, Propan und Ethan je nach Ursprung des Gases eine andere Gewichtung aufweisen. Diese drei brennbare Hauptbestandteile weisen jedoch auch unterschiedliche Heizwerte auf, so dass der Heizwert des resultierenden Gasgemisches entsprechend schwankt.

Es ist ein Gaszähler vorhanden, welcher ein Messmittel 2 zur Bestimmung eines Gasmassen-Durchflusses sowie eine hier nicht dargestellte Auswertelektronik aufweist. Das Messmittel 2 ist in einer einfachen Ausführungsform direkt im Hauptleitungsrohr 1 angeordnet. In der hier dargestellten, bevorzugten Ausführungsform zweigt jedoch vom Hauptleitungsrohr 1 ein Bypassrohr 11 ab, welches einen Bypass zur Rohrverengung 10 bildet. In diesem Bypassrohr ist das Messmittel 2 angeordnet. Beim Messmittel 2 handelt es sich um ein CMOS-Anemometer mit einer Polysilizium-Struktur im Sandwich-Aufbau, wie es in den Publikationen J. Robadey et al., Two dimensional integrated gas flow sensors by CMOS IC technology, J. Mecromech. Microeng. 5(1995) 243-250, in F. Mayer, et al., Scaling of thermal CMOS gas flow microsensors: experiment and simulation, Proc. IEEE Micro Electro Mechanical Systems, (IEEE, 1996), 116-121, sowie in F. Mayer, et al., Single-Chip CMOS Anemometer, Proc. IEEE, International Electron Devices Meeting (IEDM, 1997) 895-898, offenbart ist und in der eingangs erwähnten im veröffentlichen deutschen Patentanmeldung Nr. 199 08 664.8 zur Verwendung als Gaszähler vorgeschlagen ist.

Das Messmittel 2 weist ein Heizelement und je einen in Strömungsrichtung vor und nach dem Heizelement gleichabständig angeordneten Temperatursensor auf. Ein zu messendes Gas strömt über die Oberfläche des Messmittels 2 und wird vom Heizelement erwärmt. Mittels der Temperatursensoren wird in Strömungsrichtung vor und nach dem Heizelement die Temperatur beziehungsweise die Temperaturdifferenz des Gases gemessen, wobei ein Sensorsignal S in Form eines Spannungssignals U erhalten wird, welches sich proportional zur Temperaturdifferenz $\Delta T$ verhält. Die Wärmeübertragungsrate ist von der Anzahl Moleküle pro Volumeneinheit und somit von der Gasmasse abhängig. Zudem hängt sie jedoch auch vom Heizwert des Gasgemisches, also von der Art beziehungsweise der Zusammensetzung des Gasgemisches ab.

Erfindungsgemäss wird nun die Erkenntnis eingesetzt, dass sich das Sensorsignal in Abhängigkeit des kalorimetrischen Wertes eines Gasgemisches ändert. Dies geschieht bei einer Eichung des Geräts als Volumenmessgerät und noch stärker bei einer Eichung des Geräts als Massendurchflussmesser. In Figur 2 ist diese Abhängigkeit dargestellt. Dabei bezeichnet CW eine prozentuale Abweichung der Monatsmittelwerte vom Jahresmittelwert für den Heizwert von Erdgas. Wie ersichtlich ist, schwankt der Heizwert um ca. 2 %. Ebenfalls dargestellt und mit $\Delta S$ bezeichnet, ist eine Änderung des Sensorsignales S, welches mittels des oben beschriebenen Messmittels 2 für einen konstanten Gasfluss erhalten worden ist. Es ist ersichtlich, dass sich das Sensorsignal in die gleiche Richtung und sogar nahezu proportional zum Heizwert ändert. Diese Relation gilt nicht nur für Monatsmittelwerte, sondern selbstverständlich auch für Momentanwerte, d.h. auf einer beliebig kleinen Zeitskala.

Erfindungsgemäss lässt sich deshalb der Gaszähler beziehungsweise das Mittel zur Bestimmung des Massendurchflusses als Energiemessgerät eichen oder kalibrieren. Hierfür wird wie folgt vorgegangen:

In einem ersten Schritt werden eine Anzahl N Sensorsignalwerte $S_n$ ($\dot{V}_{N_2,n}$) in Abhängigkeit einer Volumen- oder Massendurchflussrate für ein Eichgas bestimmt, wobei dies unter Normbedingungen, das heisst bei einer definierten Temperatur (beispielsweise 20°C) und einem definierten Druck (beispielsweise bei 1 bar) erfolgt. Wie oben dargelegt sind dabei für das verwendete Messmittel 2 diese Sensorsignalwerte proportional zu einer Gasmassen-Durchflussrate. Die Sensorsignalwerte $S(\dot{V}_{N_2,n})$ werden invertiert und in Form einer Sensoreichkurve $F_n(S(\dot{V}_{N_2,n}))$ als Durchflussrate in Abhängigkeit des Sensorsignals S in der Auswertelektronik des Gaszählers gespeichert.

Als Eichgas wird erfindungsgemäß Stickstoff $N_2$ oder Luft genommen. Die Sensoreichkurve $F_n(S(\dot{V}_{N_s,n}))$ wird in einem zweiten Schritt mit einem Signal-Umrechnungsfaktor $f_{N_2\text{-}CH}$ und einem Brennwertfaktor $H_{CH}$ für ein mit dem Index CH gekennzeichnetes Basis-Gasgemisch multipliziert und wiederum gespeichert. Der Signal-Umrechnungsfaktor ist dabei ein Umrechnungsfaktor, welcher den Unterschied der Empfindlichkeit des Messmittels 2 bei der Verwendung eines Basis-Gasgemisches anstelle des Eichgases, hier Stickstoff, berücksichtigt. Der Brennwertfaktor $H_{CH}$ berücksichtigt den Heizwert dieses Basis-Gasgemisches, das heisst seinen kalorimetrischen Wert oder Brennwert pro Einheit der Durchflussgrösse, d.h. pro Standardvolumen oder pro kg. Als Basis-Gasgemisch wird vorzugsweise ein für das Einsatzgebiet des Gaszählers typisches mittleres Gasgemisch genommen.

Das erhaltene Produkt ist eine Leistung P in Abhängigkeit des Sensorsignals S

$$P = P(S) = F_n\left(S\left(\dot{V}_{N_2,n}\right)\right) * f_{N_2\text{-}CH} * H_{CH}$$

welche den momentanen Gasverbrauch als Energie pro Zeiteinheit angibt. Durch Integration über eine bestimmte Zeitspanne lässt sich somit der Energieverbrauch E bestimmen:

$$E = \int P(S) * dt = f_{N_2\text{-}CH} * H_{CH} * \int F_n\left(S\left(\dot{V}_{N_2,n}\right)\right) * dt$$

Der Gaszähler ist somit bereits als Leistungs- oder Energiemessgerät basierend auf dem Basis-Gasgemisch geeicht. Bei dessen Betrieb werden nämlich zeitliche Schwankungen der Zusammensetzung des verbrauchten Gasgemisches, d.h. Abweichungen von der Zusammensetzung des Basis-Gasgemisches, automatisch durch eine entsprechende Schwankung des Sensorsignals 5 zumindest teilweise berücksichtigt. Es ist dazu nicht notwendig, dass der zeitlich schwankende effektive Brennwert H, beziehungsweise dessen Abweichung vom Brennwert $H_{CH}$ des Basis-Gasgemisches, laufend aktualisiert wird.

Wie aus Fig.2 ersichtlich, ist die durch die erfindungsgemässe Eichung erreichte Berücksichtigung der zeitlichen Schwankungen in der Gaszusammensetzung wohl qualitativ richtig, aber quantitativ nicht perfekt. Eine weitere Verbesserung wird erreicht, indem an Stelle des Brennwertes $H_{CH}$ des Basis-Gasgemisches ein Brennwert $\overline{H}$ verwendet wird, welcher mindestens annähernd den Heizwert des effektiv bezogenen Gasgemisches berücksichtigt. Der Wert $\overline{H}$ wird beispielsweise durch eine geeignete Mittelwertbildung über einen beliebig grossen Zeitraum ermittelt. Zur Bestimmung der effektiv bezogenen Energie wird also der gemessene und auf das Basis-Gasgemisch geeichte Energieverbrauchswert mit einem Korrekturfaktor $\overline{H}/H_{CH}$ multipliziert.

Dieser Heizwert $\overline{H}$ wird vorteilhaft in einer externen Einheit entweder rechnerisch oder experimentell bestimmt. Diese Einheit muss nicht beim entsprechenden Verbraucher stehen sondern es lässt sich für ein gesamtes Verbrauchernetz eine einzige Einheit einsetzen. Diese kann Bestandteil einer Zentrale sein oder mit dieser in kommunikativer Verbindung stehen. Zur Bestimmung des Heizwertes lassen sich bekannte Mittel einsetzen. Vorteilhaft ist dabei, dass sich auch genaue und teure Messmittel hierfür einsetzen lassen, da ja nur ein einziges Gerät notwendig ist. Diese externe Einheit misst somit zu jedem oder zu bestimmten Zeitpunkten den Heizwert des durch das Verbrauchernetz strömenden Gasgemisches und speichert diesen Wert bei sich.

In einer Variante der Erfindung liefert die externe Einheit dem oder jedem Gaszähler des Verbrauchernetzes Angaben über den Heizwert $\overline{H}$ des bezogenen Gasgemisches. Dies kann in vorbestimmten Zeitabständen oder bei einer starken Veränderung des Gasgemisches erfolgen. Der Gaszähler weist in dieser Variante Rechnungselemente zur Korrektur des gemessenen Energieverbrauchswertes mit den Angaben bezüglich des Heizwertes auf. Dabei bestehen die Angaben aus dem Korrekturfaktor, dem Heizwert oder einem dem Korrekturfaktor zuordnungsbaren Code. In einer bevorzugten Variante integriert dabei der Gaszähler den gemessenen Energieverbrauchswert über eine bestimmte Zeitspanne i, beispielsweise eine Woche oder einen Monat, und multipliziert diesen Wert mit dem Korrekturfaktor $\overline{H}(i)/H_{CH}$, welcher einen über die i-te Zeitspanne gemittelten Heizwert $\overline{H}(i)$ enthält. Dadurch wird für den effektiven Energieverbrauch über m Zeitspannen erhalten:

$$E = f_{N_2-CH} \cdot \sum_{i=1}^{m} \left( \overline{H}(i) \cdot \int_i F_n (S(\dot{V}_{N_2,n})) \cdot dt \right)$$

und wenn zusätzlich die Signal-Umrechnungsfaktoren gemittelt werden

$$E = \sum_{i=1}^{m} \left( \overline{f}_{N_2-CH}(i) \cdot \overline{H}(i) \cdot \int_i F_n (S(\dot{V}_{N_2,n})) \cdot dt \right)$$

In einer anderen Variante des Verfahrens übermittelt der Gaszähler den gemessenen Energieverbrauchswert an eine Zentrale, welche den gemessenen Energieverbrauchswert mit dem Korrekturfaktor multipliziert. Ist die externe Einheit nicht in der Zentrale integriert, so übermittelt auch sie Angaben zum Heizwert des bezogenen Gasgemisches an die Zentrale. Vorzugsweise summieren beziehungsweise integrieren der Gaszähler und/oder die externe Einheit ihre Messwerte über eine bestimmte Zeitspanne und übermitteln den integrierten Wert an die Zentrale.

In allen Varianten lässt sich die Korrektur des gemessenen Energieverbrauchswerts zu einem beliebigen Zeitpunkt, also auch erst bei der Ablesung des Zählers durchführen.

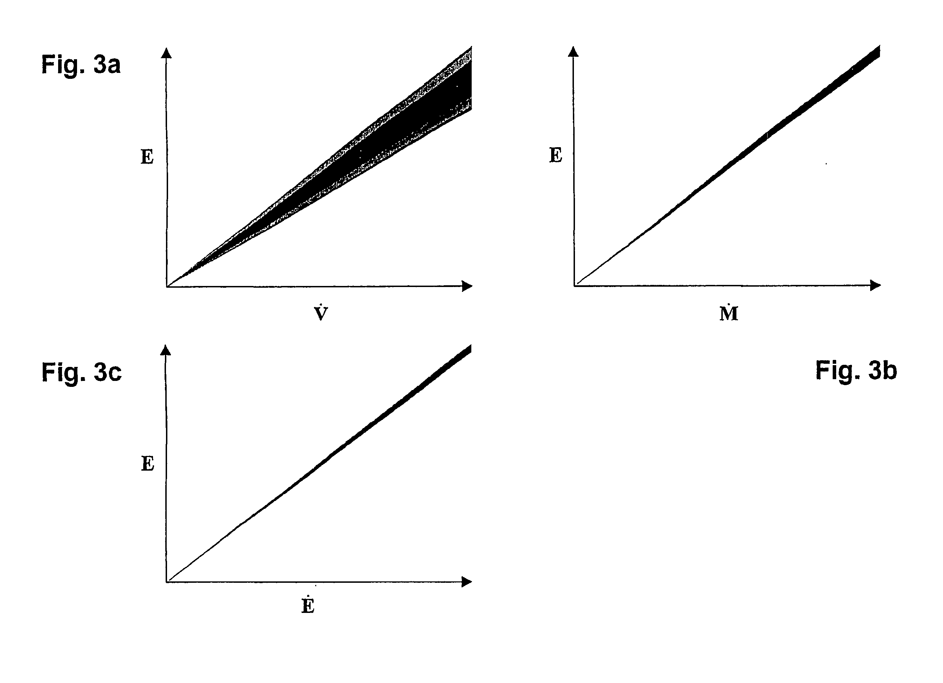

Das erfindungsgemässe Verfahren und der erfindungsgemässe Gaszähler ermöglichen dank der direkten Eichung als Energiemessgerät eine kostengünstige und faire Abrechnung des Gasbezuges. Die genauere Messmethode ist aus den Figuren 3a bis 3c ersichtlich. Diese Figuren zeigen, wie gross eine Abweichung eines gemessenen Energiewertes von einem effektiven Energiewert eines Gasgemisches ist. Dabei zeigt Figur 3a die Situation, wenn ein Gaszähler für eine Gas-Volumendurchflussmessung geeicht ist. Dargestellt ist die Volumendurchflussrate $\dot{V}$ in Funktion der Energie E. In diesem Falle für ein herkömmliches Balgenmessgerät ohne zusätzliche Temperaturkompensation. Wird mit einem solchen Gerät aus dem Volumenstrom die entsprechende Gasenergie bestimmt, so beträgt der Fehler bis zu $\pm$ 18 %. Hauptursachen für den Fehler sind Temperaturschwankungen, welche im allgemeinen maximal circa $\pm$ 10 % betragen, und Druckschwankungen von maximal circa $\pm$ 5 %. Figur 3b zeigt einen Messfehler, entstanden durch eine Eichung auf den Massenfluss, beispielsweise mit dem oben beschriebenen Messmittel 2. Dargestellt ist die Massendurchflussrate $\dot{\mathbf{M}}$ in Funktion der Energie E. Der maximale Fehler beträgt annähernd $\pm$ 4 %, wobei circa 2% durch das Messgerät und weitere circa 2% durch die zeitliche Schwankung der Zusammensetzung des Gasgemisches beziehungsweise des Brennwertes entstanden sind. Figur 3c zeigt den Messfehler bei Einsatz des obengenannten Messmittels 2 mit einer erfindungsgemässen Eichung auf den Energiefluss. Dargestellt ist die Energiedurchflussrate oder Leistung $\dot{\mathbf{E}}$ in Funktion der Energie **E.** Wie aus den Figuren ersichtlich, gibt ein direkt auf Energieflussmessung geeichtes Gerät die Wirklichkeit am besten wieder, da das Messmittel in diesem Fall zeitliche Schwankungen der Zusammensetzung des Gasgemisches automatisch in die richtige Richtung der Energiedurchflussrate korrigiert

**Bezugszeichenliste**

1      Hauptleitungsrohr

10     Rohrverengung

11     Bypassrohr

2      Messmittel

CW     Abweichung von Monatsmittelwerten

S      Sensorsignalwert

$\Delta$S     Änderung des Sensorsignalwerts S

**Patentansprüche**

**1.** Verfahren zur Bestimmung eines Gasgemisch-Verbrauchs mittels eines Gaszählers, welcher ein Anemometer (2) zur Bestimmung eines Gasmassen-Durchflusses sowie eine Auswertelektronik aufweist, wobei a) für eine direkte Kalibration des Gaszählers als Leistungs- oder Energiemessgerät Sensorsignalwerte ($S_n$) eines Eichgases in Abhängigkeit einer Durchflussrate des Eichgases ($N_2$, Luft) bestimmt und in Form einer Sensoreichkurve ($F_n(S_n)$) im Gaszähler gespeichert werden, b) die Sensoreichkurve ($F_n(S_n)$) als Durchflussrate in Abhängigkeit eines Sensorsignals (S) mit einem Signal-Umrechnungsfaktor ($f_{N2-CH}$) und mit einem den Brennwert pro Einheit der Durchflussgröße berücksichtigenden Brennwertfaktor ($H_{CH}$) für ein Basis-Gasgemisch (CH) multipliziert wird und das erhaltene Produkt eine Leistung (P) oder einen Energieverbrauchswert (E) angibt, wobei der Signal-Umrechnungsfaktor ($f_{N2-CH}$) den Unterschied der Empfindlichkeit des Anemometers (2) bei Verwendung des Basis-Gasgemisches anstelle des Eichgases berücksichtigt,
**dadurch gekennzeichnet, dass** das Eichgas ausgewählt ist aus der Gruppe bestehend aus $N_2$ oder Luft.

**2.** Verfahren nach Anspruch 1, **dadurch gekennzeichnet, dass** ein gemessener Energieverbrauchswert (E) mit einem Korrekturfaktor ($\bar{H}/H_{CH}$) multipliziert wird, welcher mindestens annähernd den Heizwert ($\bar{H}$) eines bezogenen Gasgemisches berücksichtigt.

**3.** Verfahren nach Anspruch 2, **dadurch gekennzeichnet, dass** der Heizwert ($\bar{H}$) des bezogenen Gasgemisches von einer externen Einheit bestimmt wird.

**4.** Verfahren nach Anspruch 3, **dadurch gekennzeichnet, dass** die externe Einheit Angaben über den Heizwert ($\bar{H}$) des bezogenen Gasgemisches an den Gaszähler übermittelt.

**5.** Verfahren nach Anspruch 3, **dadurch gekennzeichnet, dass** der Gaszähler den gemessenen Energieverbrauchswert und die externe Einheit Angaben über den Heizwert ($\bar{H}$) des bezogenen Gasgemisches einer Zentrale übermittelt.

**6.** Verfahren nach Anspruch 3, **dadurch gekennzeichnet, dass** die externe Einheit die Zentrale ist.

7. Verfahren nach Anspruch 1, **dadurch gekennzeichnet, dass** der Korrekturfaktor ($\overline{H}$/H$_{CH}$) einen über eine bestimmte Zeitspanne gemittelten Heizwert ($\overline{H}$) des bezogenen Gasgemisches berücksichtigt.

8. Gaszähler zur Bestimmung eines Gasgemisch-Verbrauchs, wobei der Gaszähler ein Anemometer (2) zur Bestimmung eines Gasmassen-Durchflusses sowie eine Auswertelektronik aufweist, wobei der Gaszähler als Energiemessgerät geeicht ist, wobei für eine direkte Kalibration des Gaszählers als Leistungs- oder Energiemessgerät Sensorsignalwerte (S$_n$) eines Eichgases in Abhängigkeit einer Durchflussrate des Eichgases bestimmt und in Form einer Sensoreichkurve (F$_n$(S$_n$)) als Durchflussrate in Abhängigkeit eines Sensorsignals (S) im Gaszähler gespeichert werden, die Sensoreichkurve (F$_n$((S$_n$)) mit einem Signal-Umrechungsfaktor (f$_{N2-CH}$) und mit einem den Brennwert pro Einheit der Durchflussgröße berücksichtigenden Brennwertfaktor (H$_{CH}$) für ein Basis-Gasgemisch (CH) multipliziert wird und das erhaltene Produkt eine Leistung (P) oder einen Energieverbrauchswert (E) angibt, wobei der Signal-Umrechnungsfaktor (f$_{N2-CH}$) den Unterschied der Empfindlichkeit des Anemometers (2) bei Verwendung des Basis-Gasgemisches anstelle des Eichgases berücksichtigt, der Gaszähler Korrekturmittel aufweist, um einen gemessenen Energieverbrauchswert mit einem Korrekturfaktor ($\overline{H}$/H$_{CH}$) zu multiplizieren, welcher mindestens annähernd den Heizwert ($\overline{H}$) eines bezogenen Gasgemisches berücksichtigt und dass das Messmittel (2) ein CMOS-Anemometer ist, **dadurch gekennzeichnet, dass** das Eichgas ausgewählt ist aus der Gruppe bestehend aus N$_2$ oder Luft.

## Claims

1. Method for determining a gas mixture consumption by means of a gas meter, which has an anemometer (2) for determining a gas mass flow and has analysis electronics, with a) sensor signal values (S$_n$) of a calibration gas being determined as a function of a flow rate of the calibration gas (N$_2$, air) and being stored in the form of a sensor calibration curve (F$_n$(S$_n$)) in the gas meter for a direct calibration of the gas meter as a power or energy measuring unit, b) the sensor calibration curve (F$_n$(S$_n$)), as a flow rate depending on a sensor signal (S), is multiplied by a signal conversion factor (f$_{N2-CH}$) and by a gross calorific value factor (H$_{CH}$), which takes account of the calorific value per unit of the flow parameter, for a basic gas mixture (CH) and the product obtained provides a power (P) or an energy consumption value (E), the signal conversion factor (f$_{N2-CH}$) taking account of the difference in the sensitivity of the anemometer (2) when using the basic gas mixture instead of the calibration gas, **characterized in that** the calibration gas is selected from the group comprising N$_2$ or air.

2. Method according to Claim 1, **characterized in that** a measured energy consumption value (E) is multiplied by a correction factor ($\overline{H}$/H$_{CH}$), which takes account, at least approximately, of the calorific value ($\overline{H}$) of a gas mixture withdrawn.

3. Method according to Claim 2, **characterized in that** the calorific value ($\overline{H}$) of the gas mixture withdrawn is determined by an external unit.

4. Method according to Claim 3, **characterized in that** the external unit transmits to the gas meter information about the calorific value ($\overline{H}$) of the gas mixture withdrawn.

5. Method according to Claim 3, **characterized in that** the gas meter transmits to a central facility the measured energy consumption value and the external unit transmits to a central facility information about the calorific value ($\overline{H}$) of the gas mixture withdrawn.

6. Method according to Claim 3, **characterized in that** the external unit is the central facility.

7. Method according to Claim 2, **characterized in that** the correction factor ($\overline{H}$/H$_{CH}$) takes into account a calorific value ($\overline{H}$), determined over a certain interval, of the gas mixture withdrawn.

8. Gas meter for determining a gas mixture consumption, the gas meter having an anemometer (2) for determining a gas mass flow and having analysis electronics, the gas meter being calibrated as an energy measuring unit, sensor signal values (S$_n$) of a calibration gas being determined as a function of a flow rate of the calibration gas and being stored in the form of a sensor calibration curve (F$_n$(S$_n$)), as a flow rate depending on a sensor signal (S), in the gas meter for a direct calibration of the gas meter as a power or energy measuring unit, the sensor calibration curve (F$_n$(S$_n$)) being multiplied by a signal conversion factor (f$_{N2-CH}$) and by a gross calorific value factor (H$_{CH}$), which takes account of the calorific value per unit of the flow parameter, for a basic gas mixture (CH) and the product obtained providing a power (P) or an energy consumption value (E), the signal conversion factor ($f_{N2CH}$) taking account of the difference in the sensitivity of the anemometer (2) when using the basic gas mixture instead of the calibration gas the gas meter having correction means in order to multiply a measured energy consumption value by a correction factor ($\overline{H}/H_{CH}$), which takes account at least approximately of the calorific value ($\overline{H}$) of a gas mixture withdrawn, and the measuring means (2) being a CMOS anemometer, **characterized in that** the calibration gas is selected from the group comprising $N_2$ or air.

**Revendications**

1. Procédé de détermination de la consommation en un mélange de gaz au moyen d'un compteur de gaz qui présente un anémomètre (2) qui détermine le débit massique de gaz ainsi qu'une électronique d'évaluation,

   a) des valeurs ($S_n$) de signaux d'un détecteur d'un gaz d'étalonnage étant déterminées pour étalonner directement le compteur de gaz qui présente la forme d'un appareil de mesure de puissance ou d'énergie en fonction du débit de passage du gaz d'étalonnage ($N_2$, air) et étant conservées en mémoire dans le compteur de gaz sous la forme d'une courbe ($Fn(S_n)$) d'étalonnage du détecteur,
   b) la courbe ($F_n(S_n)$) d'étalonnage du détecteur représentant le débit de passage étant multipliée en fonction d'un signal (S) du détecteur par un facteur ($f_{N2\text{-}CH}$) de conversion de signal et par un facteur ($H_{CH}$) de pouvoir calorifique d'un mélange gazeux de base (CH) qui tient compte du pouvoir calorifique unitaire de la grandeur de débit, le produit obtenu indiquant une puissance (P) ou une valeur (E) de consommation en énergie, le facteur ($f_{N2\text{-}CH}$) de conversion du signal tenant compte de la différence de sensibilité de l'anémomètre (2) lorsque le mélange gazeux de base est utilisé au lieu du gaz d'étalonnage,

   **caractérisé en ce que**
   le gaz d'étalonnage est sélectionné dans l'ensemble constitué de $N_2$ et de l'air.

2. Procédé selon la revendication 1, **caractérisé en ce qu'**une valeur mesurée (E) de la consommation d'énergie est multipliée par un facteur de correction ($\overline{H}/H_{CH}$) qui tient compte au moins approximativement du pouvoir calorifique ($\overline{H}$) du mélange de gaz concerné.

3. Procédé selon la revendication 2, **caractérisé en ce que** le pouvoir calorifique ($\overline{H}$) du mélange de gaz concerné est déterminé par une unité externe.

4. Procédé selon la revendication 3, **caractérisé en ce que** l'unité externe transmet au compteur de gaz des données concernant le pouvoir calorifique ($\overline{H}$) du mélange de gaz concerné.

5. Procédé selon la revendication 3, **caractérisé en ce que** le compteur de gaz transmet à une centrale la valeur mesurée de consommation d'énergie et **en ce que** l'unité externe transmet à une centrale les données concernant le pouvoir calorifique ($\overline{H}$) du mélange de gaz concerné.

6. Procédé selon la revendication 3, **caractérisé en ce que** l'unité externe est la centrale.

7. Procédé selon la revendication 1, **caractérisé en ce que** le facteur de correction ($\overline{H}/H_{CH}$) tient compte d'une moyenne du pouvoir calorifique ($\overline{H}$) du mélange de gaz concerné déterminée sur une durée définie.

8. Compteur de gaz destiné à déterminer la consommation en un mélange de gaz, le compteur de gaz présentant un anémomètre (2) qui détermine le débit massique de gaz ainsi qu'une électronique d'évaluation, le compteur de gaz étant étalonné en tant qu'appareil de mesure d'énergie, des valeurs ($S_n$) de signaux d'un détecteur d'un gaz d'étalonnage étant déterminées pour étalonner directement le compteur de gaz qui présente la forme d'un appareil de mesure de puissance ou d'énergie en fonction du débit de passage du gaz d'étalonnage et étant conservées en mémoire dans le compteur de gaz sous la forme d'une courbe ($F_n(S_n)$) d'étalonnage du détecteur en tant que valeurs de débit qui sont fonction du débit de passage, la courbe ($F_n(S_n)$) d'étalonnage du détecteur étant multipliée en fonction d'un signal (S) du détecteur par un facteur ($f_{N2\text{-}CH}$) de conversion de signal et par un facteur ($H_{CH}$) de pouvoir calorifique d'un mélange gazeux de base (CH) qui tient compte du pouvoir calorifique unitaire de la grandeur de débit, le produit obtenu indiquant une puissance (P) ou une valeur (E) de consommation en énergie, le facteur ($f_{N2\text{-}CH}$) de conversion du signal tenant compte de la différence de sensibilité de l'anémomètre (2) lorsque le mélange gazeux de base est utilisé au lieu du gaz d'étalonnage,

le compteur de gaz présentant des moyens de correction qui multiplient une valeur mesurée de la consommation en énergie par un facteur de correction ($\overline{H}$/H$_{CH}$) qui tient compte au moins approximativement du pouvoir calorifique ($\overline{H}$) du mélange de gaz concerné, le moyen de mesure (2) étant un anémomètre CMOS, **caractérisé en ce que** le gaz d'étalonnage est sélectionné dans l'ensemble constitué de N$_2$ et de l'air.

EP 1 290 412 B1

**Fig. 1**

Delta [%]

Monat in 1999

—■— CW
—⊕— ΔS

**Fig. 2**

Fig. 3a

Fig. 3b

Fig. 3c

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 9906800 A
- DE 19908664
- WO 0011465 A
- US 6047589 A
- US 5237523 A

### In der Beschreibung aufgeführte Nicht-Patentliteratur

- **F. MAYER et al.** Single-Chip CMOS Anemometer. *Proc. IEEE, International Electron Devices Meeting,* 1997, 895-898
- **J. ROBADEY et al.** Two dimensional integrated gas flow sensors by CMOS IC technology. *J. Mecromech. Microeng.,* 1995, vol. 5, 243-250
- **F. MAYER et al.** Scaling of thermal CMOS gas flow microsensors: experiment and simulation. *Proc. IEEE Micro Electro Mechanical Systems,* 1996, 116-121
- **F. MAYER et al.** Single-Chip CMOS Anemometer. *Proc. IEEE, International Electron Devices Meeting,* 895-898